# EUROPEAN PATENT APPLICATION

(11) **EP 3 378 594 A1**
(43) Date of publication of application: **26.09.2018**
(21) Application number: 18162473.5
(22) Date of filing: 19.03.2018
(51) Int. Cl.: B23K 35/30, B23K 35/36, B23K 35/362, B23K 35/368, B23K 35/38, B23K 35/00, B23K 35/02, C22C 38/00, C22C 38/02, C22C 38/04, C22C 38/06, C22C 38/08, C22C 38/14, C22C 38/16

(54) **FLUX-CORED WIRE FOR GAS-SHIELDED ARC WELDING**

(30) Priority: 21.03.2017 JP 2017054204
(71) Applicant: Nippon Steel & Sumikin Welding Co., Ltd., Tokyo 135-0016 (JP)
(72) Inventor: SASAKI, Kiyohito, Tokyo, 135-0016 (JP); SAKABAYASHI, Naoki, Tokyo, 135-0016 (JP); CHIBA, Ryutaro, Tokyo, 135-0016 (JP)
(74) Representative: Rings, Rolf

(57) **Abstract**

A flux-cored wire for gas-shielded arc welding, including, in terms of mass% relative to a total mass of the wire, in the total of the steel outer sheath and the flux, C: 0.03 to 0.08%, Si: 0.1 to 0.6%, Mn: 1.5 to 2.8%, Cu: 0.01 to 0.5%, Ni: 0.35 to 0.98%, Ti: 0.05 to 0.25%, and B: 0.002 to 0.015%, Al: 0.05% or less, and including, in the flux, TiO₂ conversion value: 3 to 8%, Al₂O₃ conversion value: 0.1 to 0.6%, SiO₂ conversion value: 0.2 to 1.0%, ZrO₂ conversion value: 0.20 to 0.65%, Mg: 0.2 to 0.8%, F conversion value: 0.05 to 0.25%, Na conversion value: 0.02 to 0.10%, and K conversion value: 0.05 to 0.20%.

## Description

### BACKGROUND

### Technical field

The present invention relates to a flux-cored wire for gas-shielded arc welding capable of obtaining good welding workability in all position welding when welding steel used for steel structures and the like, and a weld metal having excellent low-temperature toughness.

### Related Art

Welding of steel structures often uses rutile-type flux-cored wires for welding which are very excellent in welding efficiency and welding workability in all position welding, and are widely applied in wide fields such as shipbuilding, bridges, marine structures, and steel frames. However, since rutile-type flux-cored wires for welding has a flux mainly composed of metal oxides including TiO₂ filled in a steel outer sheath, the amount of oxygen in the weld metal is large, and low-temperature toughness is not obtained.

Various developments have been made so far on techniques for improving the low-temperature toughness of the rutile-type flux-cored wires for welding. For example, JP 2009-61474 A discloses a technique to add an alloy component such as Ti that changes to a slag component during welding, in order to obtain a weld metal having excellent low-temperature toughness by reducing the amount of oxygen of the weld metal while maintaining the amount of slag so as not to occur dripping of the molten metal (hereinafter referred to as metal sagging) in vertical upward welding. However, according to the technique disclosed in JP 2009-61474 A, there have been problems that the arc state is unstable, the spatter generation amount is large, the bead appearance is poor, and sufficient low-temperature toughness of the weld metal cannot be obtained.

Also, JP H06-238483 A also discloses a technique to obtain a weld metal having excellent low-temperature toughness. According to the technique disclosed in JP H06-238483 A, a sufficient deoxidizing effect against the amount of oxygen supplied from TiO₂ and SiO₂ in the slag agent is secured by appropriately maintaining the added amount of the deoxidizer such as Ca and Al, thereby promoting the reduction of TiO₂. However, there have been problems that Ca added as a strong deoxidizer made the arc unstable at the time of welding, resulting in a large spatter generation amount and poor welding workability.

JP H04-224094 A discloses a technique to greatly improve the seawater corrosion resistance of the weld metal by regulating the steel outer sheath component and adding Cu, Ni, Ti, B to the filling flux, and obtain low-temperature toughness. However, in the technique disclosed in JP H04-224094 A, the metal fluoride is much added, thus the arc becomes unstable at the time of welding, and large amounts of spatter and fume are generated, so that there has been a problem that good welding workability cannot be obtained.

Further, JP H04-309492 A discloses a technique to obtain a weld metal having excellent low-temperature toughness by limiting the ratio of metal Ti and TiO₂ in the filling flux. However, since the technique disclosed in JP H04-309492 A does not contain an arc stabilizer, there have been problems that the arc is unstable and the spatter generation amount is large at the time of welding, and the bead appearance becomes poor since the amount of slag forming agent is small.

### SUMMARY

Accordingly, the present invention has been made in view of the above-described problems, and it is an object of the present invention to provide a flux-cored wire for gas-shielded arc welding capable of obtaining a weld metal having good welding workability in all position welding when welding steel used for steel structures and the like, and having excellent low-temperature toughness.

The present inventors have conducted various studies on a rutile-type flux-cored wire for gas-shielded arc welding to obtain a weld metal having good welding workability such that the arc is stable in all position welding, the spatter generation amount is small, slag removability and bead appearance are good and no metal sagging occurs in vertical upward welding, and having excellent low-temperature toughness at -60°C.

As a result, the present inventors have found that, by using a slag component including a metal oxide mainly composed of TiO₂ and a fluorine compound and a component containing an optimum alloy component and a deoxidizer, good welding workability such as good stability of the arc in all positions, reduced spatter generation amount, good slag removability and good appearance and shape of the bead and a weld metal having excellent low-temperature toughness.

More specifically, the gist of the present invention is a flux-cored wire for gas-shielded arc welding which has a steel outer sheath filled with a flux, including, in terms of mass% relative to a total mass of the wire, in the total of the steel outer sheath and the flux, C: 0.03 to 0.08%, Si: 0.1 to 0.6%, Mn: 1.5 to 2.8%, Cu: 0.01 to 0.5%, Ni: 0.35 to 0.98%, Ti: 0.05 to 0.25%, and B: 0.002 to 0.015%, Al: 0.05% or less, further including, in terms of mass% relative to a total mass of the wire, in the flux, the total of Ti oxides in terms of TiO₂: 3 to 8%, the total of Al oxides in terms of Al₂O₃: 0.1 to 0.6%, the total of Si oxides in terms of SiO₂: 0.2 to 1.0%, the total of Zr oxides in terms of ZrO₂: 0.20 to 0.65%, Mg: 0.2 to 0.8%, the total of fluorine compounds in terms of F: 0.05 to 0.25%, the total of Na compounds in terms of Na: 0.02 to 0.10%, and the total of K compounds in terms of K: 0.05 to 0.20%, and the balance being Fe of the steel outer sheath, iron powder, Fe component of iron alloy powder and inevitable impurities.

Also, the gist of the present invention is a flux-cored wire for gas-shielded arc welding, further including, in terms of mass% relative to a total mass of the wire, in the flux, one or both of Bi and Bi oxides in terms of Bi: 0.003 to 0.010%.

According to the flux-cored wire for gas-shielded arc welding of the present invention, it is possible to improve welding efficiency and the quality of the welded part, like obtaining good welding workability such that the arc is stable in all position welding, the spatter generation amount is small, slag removability and bead appearance and shape are good and no metal sagging occurs in vertical upward welding, and a weld metal having excellent low-temperature toughness at -60°C.

### DETAILED DESCRIPTION

Hereinafter, the component composition of the flux-cored wire for gas-shielded arc welding of the present invention and reasons for limiting the component composition will be described. The content of each component is expressed in terms of mass% relative to a total mass of the flux-cored wire, and when representing the mass%, it is expressed simply as %.

### [C: 0.03 to 0.08% in the total of the steel outer sheath and the flux]

C has an effect of enhancing the strength of the weld metal. However, when C is less than 0.03%, the strength of the weld metal decreases. On the other hand, when C exceeds 0.08%, C is excessively retained in the weld metal, whereby the strength of the weld metal increases and the low-temperature toughness deteriorates. Accordingly, C is set to be 0.03 to 0.08% in the total of the steel outer sheath and the flux. C can be added from metal powder, alloy powder and the like from the flux, in addition to the components contained in the steel outer sheath.

### [Si: 0.1 to 0.6% in the total of the steel outer sheath and the flux]

Si partly becomes a weld slag at the time of welding, thereby improving the appearance and bead shape of the weld bead and contributing to improvement in welding workability. However, when Si is less than 0.1%, the effect of improving the appearance of the bead and the bead shape cannot be sufficiently obtained. On the other hand, when Si exceeds 0.6%, Si is excessively retained in the weld metal, whereby the low-temperature toughness of the weld metal deteriorates. Accordingly, Si is set to be 0.1 to 0.6% in the total of the steel outer sheath and the flux. Si can be added from metal Si, and alloy powder such as Fe-Si and Fe-Si-Mn from the flux, in addition to the components contained in the steel outer sheath.

### [Mn: 1.5 to 2.8% in the total of the steel outer sheath and the flux]

Mn, like Si, partly becomes a weld slag at the time of welding, thereby improving the appearance and bead shape of the bead and contributing to improvement in welding workability. In addition, Mn is retained in the weld metal, thereby having the effect of increasing the strength and the low-temperature toughness of the weld metal. However, when Mn is less than 1.5%, the bead appearance and the bead shape are poor, and the low-temperature toughness of the weld metal decreases. On the other hand, when Mn exceeds 2.8%, Mn is excessively retained in the weld metal and the strength of the weld metal increases, whereby the low-temperature toughness of the weld metal deteriorates instead. Accordingly, Mn is set to be 1.5 to 2.8% in the total of the steel outer sheath and the flux. Mn can be added from metal Mn, and alloy powder such as Fe-Mn and Fe-Si-Mn from the flux, in addition to the components contained in the steel outer sheath.

### [Cu: 0.01 to 0.5% in the total of the steel outer sheath and the flux]

Cu has the effect of refining the structure of the weld metal and increasing low-temperature toughness and strength. However, when Cu is less than 0.01%, the strength and low-temperature toughness of the weld metal decrease. On the other hand, when Cu exceeds 0.5%, the strength of the weld metal becomes excessive and the low-temperature toughness decreases. Accordingly, Cu is set to be 0.01 to 0.5% in the total of the steel outer sheath and the flux. Cu can be added from metal Cu, and alloy powder such as Cu-Zr and Fe-Si-Cu from the flux, in addition to Cu plating applied to the surface of the steel outer sheath.

### [Ni: 0.35 to 0.98% in the total of the steel outer sheath and the flux]

Ni has an effect of improving the low-temperature toughness of the weld metal. However, when Ni is less than 0.35%, the low-temperature toughness of the weld metal decreases. On the other hand, when Ni exceeds 0.98%, hot cracks tend to occur in the weld metal. Accordingly, Ni is set to be 0.35 to 0.98% in the total of the steel outer sheath and the flux. Ni can be added from metal Ni, and alloy powder such as Fe-Ni from the flux, in addition to the components contained in the steel outer sheath.

### [Ti: 0.05 to 0.25% in the total of the steel outer sheath and the flux]

Ti has the effect of refining the structure of the weld metal and improving low-temperature toughness. However, when Ti is less than 0.05%, the low-temperature toughness of the weld metal decreases. On the other hand, when Ti exceeds 0.25%, an upper bainite structure that inhibits toughness is formed, and low-temperature toughness is lowered. Accordingly, Ti is set to be 0.05 to 0.25% in the total of the steel outer sheath and the flux. Ti can be added from metal Ti, and alloy powder such as Fe-Ti from the flux, in addition to the components contained in the steel outer sheath.

### [B: 0.002 to 0.015% in the total of the steel outer sheath and the flux]

B has the effect of refining the microstructure of the weld metal by adding a trace amount and improving the low-temperature toughness of the weld metal. However, when B is less than 0.002%, the low-temperature toughness of the weld metal decreases. On the other hand, when B exceeds 0.015%, the low-temperature toughness of the weld metal decreases and hot cracks tend to occur in the weld metal. Accordingly, B is set to be 0.002 to 0.015% in the total of the steel outer sheath and the flux. B can be added from metal B, and alloy powder such as Fe-B and Fe-Mn-B from the flux, in addition to the components contained in the steel outer sheath.

### [Al: 0.05% or less in the total of the steel outer sheath and the flux]

Al remains in the weld metal as an oxide and the toughness of the weld metal decreases. Especially when Al exceeds 0.05%, the toughness of the weld metal decreases. Accordingly, Al is set to 0.05% or less. Al may not be an essential element, and the content may be 0%.

### [Total of Ti oxides contained in the flux in terms of TiO₂: 3 to 8%]

Ti oxide contributes to the stabilization of the arc at the time of welding and has the effect of improving bead shape and contributing to the improvement of welding workability. Ti oxide also has the effect of adjusting the viscosity and melting point of the molten slag in the vertical upward welding and preventing metal sagging. However, when the total of Ti oxides in terms of TiO₂ is less than 3%, the arc is unstable, the spatter generation amount increases, the bead appearance and the bead shape deteriorate, and the low-temperature toughness of the weld metal decreases. Metal sagging occurs and the bead appearance and bead shape become poor in vertical upward welding. On the other hand, when the total of Ti oxides in terms of TiO₂ exceeds 8%, the arc is stable and the spatter generation amount is also small, but the Ti oxide excessively remains in the weld metal, whereby the low-temperature toughness decreases. Accordingly, the total of Ti oxides contained in the flux in terms of TiO₂ is set to be 3 to 8%. The Ti oxide is added from rutile, titanium oxide, titanium slag, ilmenite or the like from the flux.

### [Total of Al oxides contained in the flux in terms of Al₂O₃: 0.1 to 0.6%]

Al oxide has the effect of adjusting the viscosity and melting point of the weld slag at the time of welding, and particularly preventing the metal sagging in the vertical upward welding. However, when the total of Al oxides in terms of Al₂O₃ is less than 0.1%, metal sagging occurs and the bead appearance and bead shape become poor in vertical upward welding. On the other hand, when the total of Al oxides in terms of Al₂O₃ exceeds 0.6%, the Al oxide excessively remains in the weld metal, whereby the low-temperature toughness decreases. Accordingly, the total of Al oxides contained in the flux in terms of Al₂O₃ is set to be 0.1 to 0.6%. The Al oxide can be added from alumina or the like from the flux.

### [Total of Si oxides contained in the flux in terms of SiO₂: 0.2 to 1.0%]

Si oxide has the effect of improving slag encapsulation by adjusting the viscosity and melting point of the molten slag and improving compatibility in the bead toe. However, when the total of Si oxides in terms of SiO₂ is less than 0.2%, the slag encapsulation is deteriorated, the bead appearance is poor, and compatibility in the bead toe also becomes poor. On the other hand, when the total of Si oxides in terms of SiO₂ exceeds 1.0%, the Si oxide excessively remains in the weld metal, whereby the low-temperature toughness decreases. Accordingly, the total of Si oxides contained in the flux in terms of SiO₂ is set to be 0.2 to 1.0%. The Si oxide can be added from silica sand, zircon sand, sodium silicate or the like from the flux.

### [Total of Zr oxides contained in the flux in terms of ZrO₂: 0.20 to 0.65%]

Zr oxide has the effect of adjusting the viscosity and melting point of the weld slag, and particularly preventing the metal sagging in the vertical upward welding. However, when the total of Zr oxides in terms of ZrO₂ less than 0.20%, metal sagging occurs in vertical upward welding and the bead appearance and the bead shape become poor. On the other hand, when the total of Zr oxides in terms of ZrO₂ exceeds 0.65%, slag removability deteriorates. Accordingly, the total of Zr oxides contained in the flux in terms of ZrO₂ is set to be 0.20 to 0.65%. The Zr oxide can be added from zircon sand, zirconium oxide or the like from the flux.

### [Mg contained in the flux: 0.2 to 0.8%]

Mg functions as a strong deoxidizer, thereby having the effect of reducing oxygen in the weld metal and enhancing the low-temperature toughness of the weld metal. However, when Mg is less than 0.2%, the low-temperature toughness of the weld metal decreases. On the other hand, when Mg exceeds 0.8%, it reacts violently with oxygen in the arc at the time of welding, and the generation amounts of spatter and fume increase. Accordingly, Mg contained in the flux is set to be 0.2 to 0.8%. Mg can be added from metal Mg, and alloy powder such as Al-Mg from the flux.

### [Total of fluorine compounds contained in the flux in terms of F: 0.05 to 0.25%]

Fluorine compounds have the effect of stabilizing the arc. However, when the total of the fluorine compounds in terms of F is less than 0.05%, the arc becomes unstable. On the other hand, when the total of the fluorine compounds in terms of F exceeds 0.25%, the arc becomes unstable, and the generation amounts of spatter and fume increase. Further, in the vertical upward welding, metal sagging tends to occur and the bead appearance and the bead shape become poor. Accordingly, the total of the fluorine compounds contained in the flux in terms of F is set to be 0.05 to 0.25%. The fluorine compound can be added from CaF₂, NaF, KF, LiF, MgF₂, K₂SiF₆, K₂ZrF₆, Na₂AlF₆, AlF₃ and the like, and the F conversion value is the total content of F contained therein.

### [Total of Na compounds contained in the flux in terms of Na: 0.02 to 0.10%]

The Na compound acts as an arc stabilizer and a slag former. When the total of the Na compounds in terms of Na is less than 0.02%, the concentration of the arc decreases in all position welding and becomes unstable, and the spatter generation amount increases. On the other hand, when the total of the Na compounds in terms of Na exceeds 0.10%, the arc excessively concentrates and the arc itself becomes thin, so that metal sagging tends to occur in vertical upward welding. Accordingly, the total of the Na compounds contained in the flux in terms of Na is set to be 0.02 to 0.10%. The Na compound can be added from a solid component of water glass composed of sodium silicate, and powders such as NaF, Na₂AlF₆ and sodium titanate and the like from the flux, and the Na conversion value is the total content of Na contained therein.

### [Total of K compounds contained in the flux in terms of K: 0.05 to 0.20%]

Like the Na compound, the K compound acts as an arc stabilizer and a slag former, when the total of the K compounds in terms of K is less than 0.05%, the arc becomes unstable in all position welding, and the spatter generation amount increases. On the other hand, when the total of K compound in terms of K exceeds 0.20%, slag encapsulation and slag removability become poor in all position welding and shape and appearance of the bead also become poor. The K compound can be added from a solid component of water glass composed of potassium silicate, and powders such as potassium feldspar, K₂SiF₆, K₂ZrF₆ and potassium titanate and the like from the flux, and the K conversion value is the total content of K contained therein.

### [One or both of Bi and Bi oxides contained in the flux in terms of Bi: 0.0 03 to 0.010%]

Bi promotes peeling of the weld slag from the weld metal and improves slag removability. When one or both of Bi and Bi oxides in terms of Bi is less than 0.003%, the effect of promoting slag removal is insufficient. On the other hand, when one or both of Bi and Bi oxides in terms of Bi exceeds 0.010%, cracks may occur in the weld metal and the low-temperature toughness decreases. Accordingly, one or both of Bi and Bi oxides contained in the flux in terms of Bi is 0.003 to 0.010%. The Bi and Bi oxides are added from metal Bi, oxidized Bi and the like.

The flux-cored wire for gas-shielded arc welding of the present invention has a structure in which a steel outer sheath is formed into a pipe shape and a flux is filled inside the steel outer sheath. As a kind of wire, wires can be broadly divided into wires with seamless steel outer sheath obtained by welding a joint of the formed steel outer sheath and wires without a seam on the steel outer sheath without welding a joint of the steel outer sheath. In the present invention, it is possible to adopt a wire of any sectional structure, but a wire without a seam on the steel outer sheath can be subjected to a heat treatment for reducing the total amount of hydrogen in the wire, and since there is no moisture absorption of the flux after production, the amount of diffusible hydrogen of the weld metal can be reduced and the low temperature cracking resistance can be improved, which are more preferable.

The balance of the flux-cored wire for gas-shielded arc welding of the present invention is Fe of the steel outer sheath, iron powder added for component adjustment, Fe component of iron alloy powder such as Fe-Mn and Fe-Si alloys and inevitable impurities. Although the flux filling rate is not particularly limited, it is preferably 8 to 20% relative to the total mass of the wire from the viewpoint of productivity.

### Examples

Hereinafter, the effects of the present invention will be specifically described.

SPCC specified in JIS G 3141 as the components shown in Table 1 as a steel outer sheath was used to form into a U-shape in the process of forming a steel outer sheath, then a wire without a seam on the steel outer sheath by welding a joint of the formed steel outer sheath was formed and drawn to prototype flux-cored wires of various components shown in Table 1 and Table 2. The wire diameter was set to be 1.2 mm.

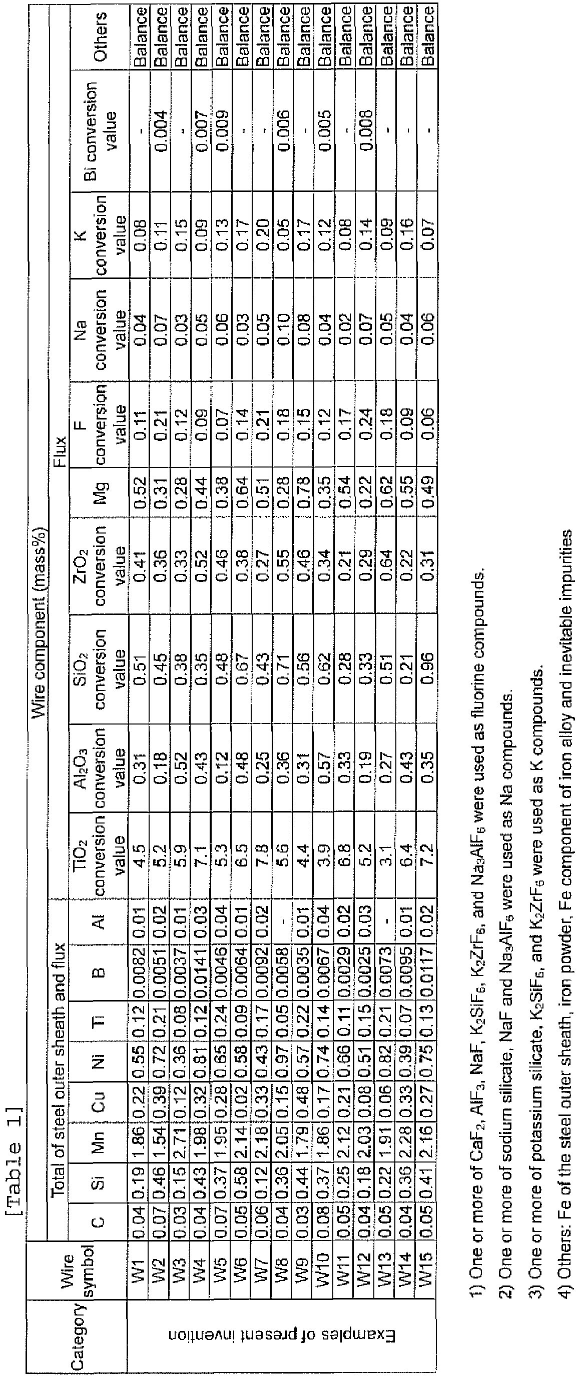

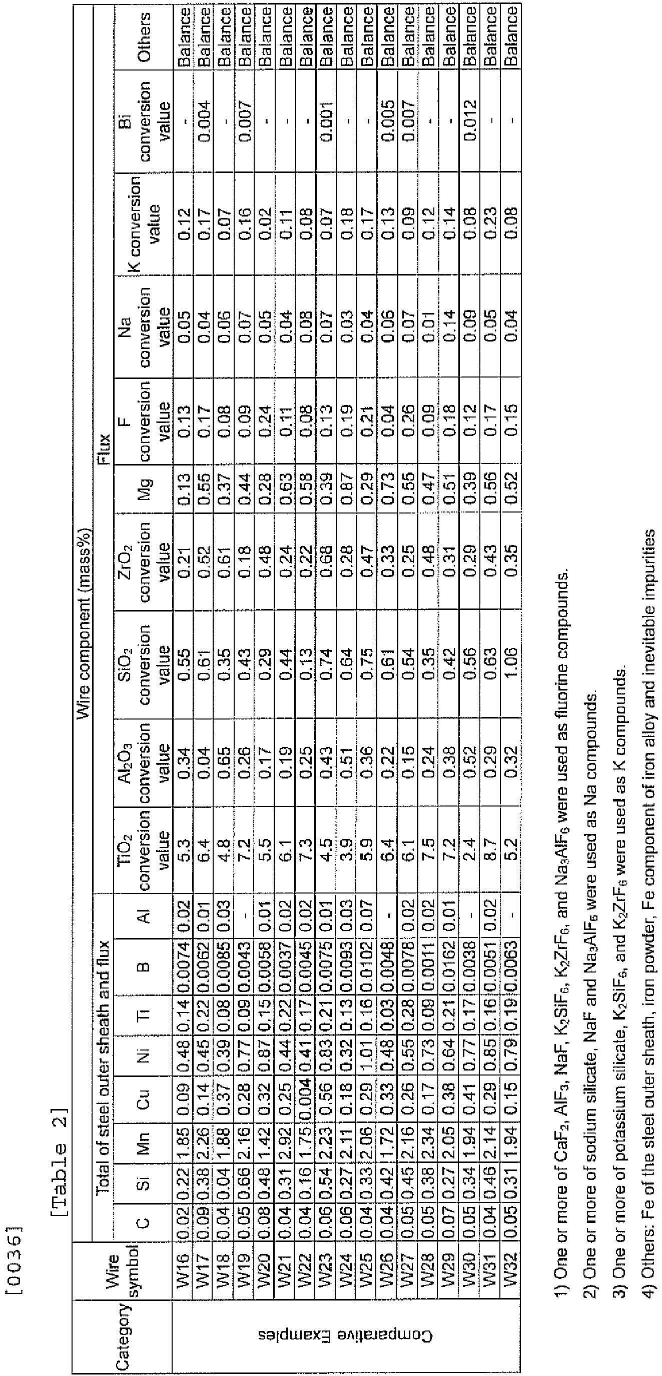

The prototype wires were evaluated for welding workability by horizontal fillet welding and vertical upward fillet welding using a steel plate specified in JIS Z G3126 SLA365, and was evaluated for mechanical characteristics as a deposited metal test. These welding conditions are shown in Table 3.

**[Table 3]**

| Test item | Welding position | Plate thickness (mm) | Welding method | Shielding gas | Groove | Current (A) | Voltage (V) | Welding speed (cm/min) |
|---|---|---|---|---|---|---|---|---|
| Welding workability evaluation | Horizontal fillet | 12 | Automatic MAG | Ar-20% CO₂ 25 L/min | T shaped horizontal fillet | 270 | 29 | 50 |
| | Vertical upward | 12 | Semiautomatic MAG | | T shaped horizontal fillet | 210 | 23 | about 10 |
| Deposited metal test | Downward | 20 | Automatic MAG | | In conformity with JIS Z 3111 | 270 | 29 | 30 |

The welding workability was evaluated by investigating the stability of the arc, the generation state of spatter and fume, the slag removability and the appearance and shape of the bead in the horizontal fillet welding test, and by investigating, in particular, existence of molten metal sagging, the appearance and shape of the bead in the vertical upward welding test.

In the deposited metal test, welding was conducted according to JIS Z 3111, X-ray radiography was performed according to JIS Z 3106 to investigate existence of weld defect, then a tensile test piece (A0) and impact test piece (V notch specimen) were taken from the center part in the plate thickness direction of the deposited metal, and mechanical tests were performed. Evaluation of toughness was performed by a Charpy impact test at -60°C. The test was repeatedly for each test piece, and a test piece having an average of three absorption energies of 60 J or more was evaluated as good. For the evaluation of the tensile test, a test piece having a tensile strength of 570 to 720 MPa or more was evaluated as good. These results are summarized in Tables 4 and 5.

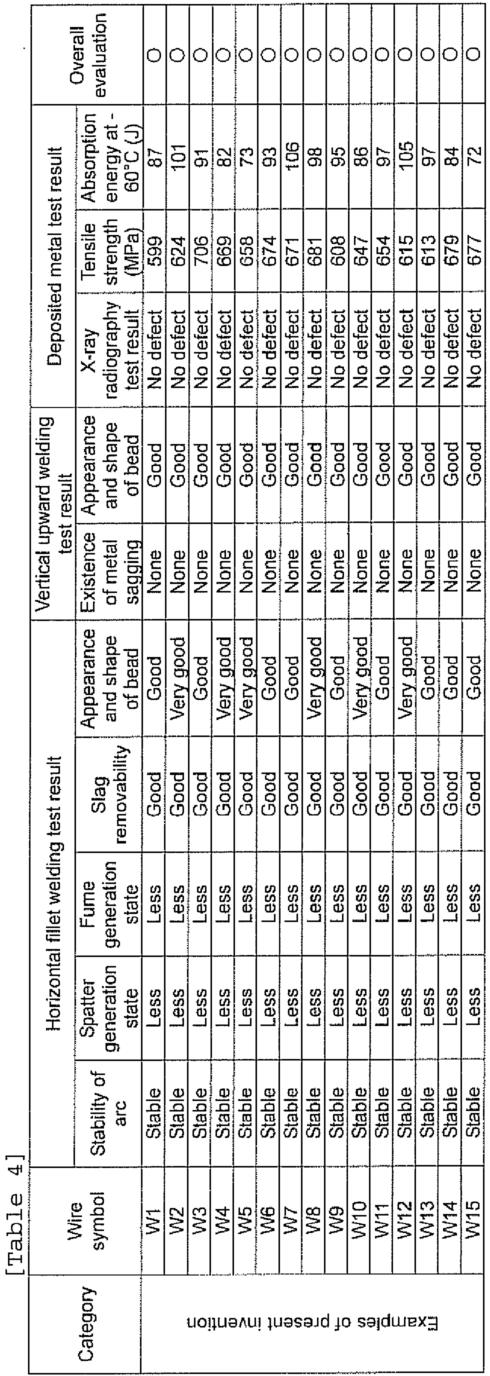

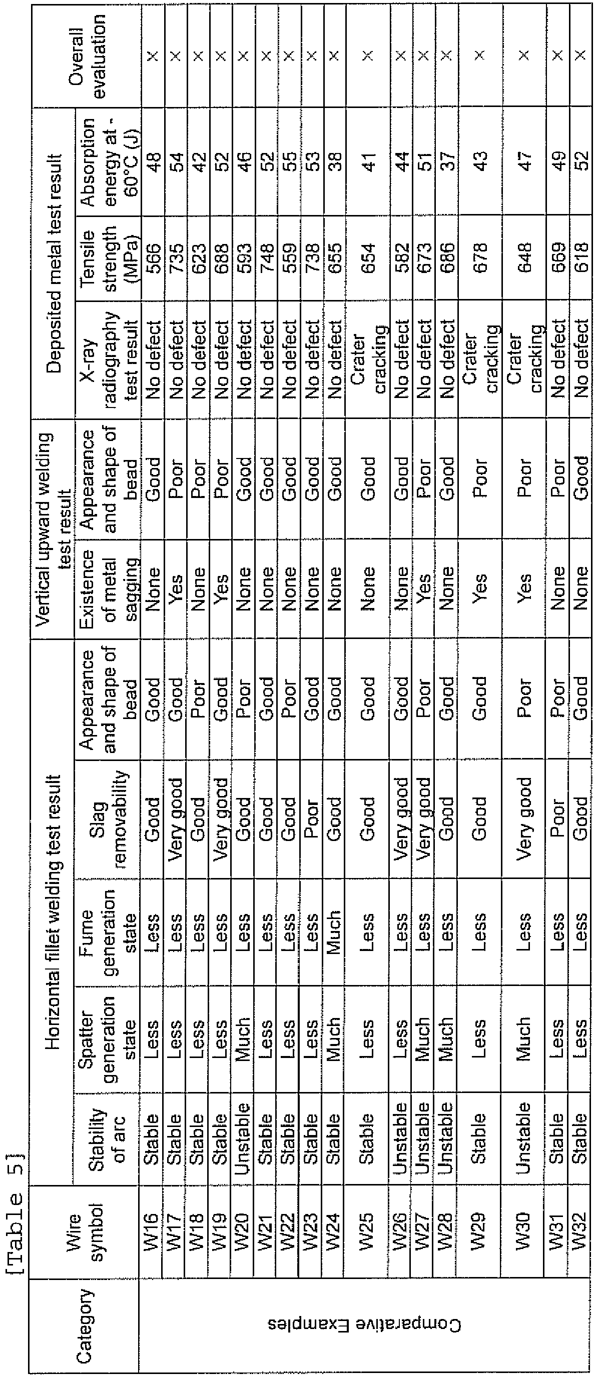

Wire symbols W1 to W15 in Tables 1 and 4 are examples of the present invention, and wire symbols W16 to W32 in Tables 2 and 5 are comparative examples. The wire symbols W1 to W15 which are examples of the present invention have C, Si, Mn, Cu, Ni, Ti, B, Al, the total of Ti oxides in terms of TiO₂, the total of Al oxides in terms of Al₂O₃, the total of Si oxides in terms of SiO₂, the total of Zr oxides in terms of ZrO₂, Mg, the total of the fluorine compounds in terms of F, the total of the Na compounds in terms of Na, and the total of the K compounds in terms of K within the ranges specified in the present invention. Thus, the result were extremely satisfactory such that welding workability in the horizontal fillet welding test was good, there was no metal sagging in the vertical upward welding test, there were no weld defect in the deposited metal test, and good values of the tensile strength and absorption energy of the deposited metal were obtained. Since the wire symbols W2, W4, W5, W8, W10 and W12 contained an appropriate amount in terms of Bi, slag removability was very good.

Among the comparative examples, since the wire symbol W16 contained less C, the tensile strength of the deposited metal was low. Also, since the wire symbol W16 contained less Mg, the absorption energy of the deposited metal was also low.

Since the wire symbol W17 contained much C, the tensile strength of the deposited metal was high and the absorption energy was low. Also, since the total of Al oxides in terms of Al₂O₃ was small, metal sagging occurred and the appearance and shape of the bead was poor in the vertical upward welding test.

Since the wire symbol W18 contained less Si, the appearance and shape of the bead was poor in both the horizontal fillet welding test and the vertical upward welding test. Also, since the total of Al oxides in terms of Al₂O₃ was large, the absorption energy of the deposited metal was low.

Since the wire symbol W19 contained much Si, the absorption energy of the deposited metal was low. In addition, since the total of Zr oxides in terms of ZrO₂ was small, metal sagging occurred and the appearance and shape of the bead was poor in the vertical upward welding test.

Since the wire symbol W20 had less Mn, the appearance and shape of the bead was poor in the horizontal fillet welding test, and the absorption energy of the deposited metal was low. Also, since the total of the K compounds in terms of K was small, the arc was unstable and the spatter generation amount was large in the horizontal fillet welding test.

Since the wire symbol W21 contained much Mn, the tensile strength of the deposited metal was high and the absorption energy was low.

Since the wire symbol W22 had less Cu, the tensile strength of the deposited metal was low and the absorption energy was also low. Also, since the total of Si oxides in terms of SiO₂ was small, slag encapsulation was poor and the appearance and shape of the bead were poor in the horizontal fillet welding test.

Since the wire symbol W23 contained much Cu, the tensile strength of the deposited metal was high and the absorption energy was low. Also, since the total of Zr oxides in terms of ZrO₂ was large, slag removability was poor in the horizontal fillet welding test. Since the Bi conversion value was small, the effect of improving the slag removability was not obtained.

Since the wire symbol W24 contained less Ni, the absorption energy of the deposited metal was low. Also, since the wire symbol W24 contained much Mg, spatter and fume were much generated in the horizontal fillet welding test.

Since the wire symbol W25 contained much Ni, crater cracking occurred in the deposited metal test. In addition, since the wire symbol W25 contained much Al, the absorption energy of the deposited metal was low.

Since the wire symbol W26 contained less Ti, the absorption energy of the deposited metal was low. Also, since the total of the fluorine compounds in terms of F was small, the arc was unstable in the horizontal fillet welding test.

Since the wire symbol W27 contained much Ti, the absorption energy of the deposited metal was low. Also, since the total of the fluorine compounds in terms of F was large, the arc was unstable, the spatter generation amount was large, the appearance and shape of the bead were also poor in the horizontal fillet welding test, and metal sagged and the appearance and shape of the bead were poor in the vertical upward welding test.

Since the wire symbol W28 contained less B, the absorption energy of the deposited metal was low. Also, since the total of the Na compounds in terms of Na was small, the arc was unstable and the spatter generation amount was large in the horizontal fillet welding test.

Since the wire symbol W29 contained much B, crater cracking occurred in the deposited metal test, and the absorption energy of the deposited metal was low. Also, since the total of the Na compounds in terms of Na was large, metal sagged and the appearance and shape of the bead were poor in the vertical upward welding test.

In the wire symbol W30, since the total of Ti oxides in terms of TiO₂ was small, the arc was unstable, the spatter generation amount was large and the appearance and shape of the bead were poor in the horizontal fillet welding test, and metal sagging occurred and the appearance and shape of the bead were poor in the vertical upward welding test. Also, since the Bi conversion value was large, crater cracking occurred in the deposited metal test, and the absorption energy of the deposited metal was low.

In the wire symbol W31, since the total of Ti oxides in terms of TiO₂ was large, the absorption energy of the deposited metal was low. Also, since the total of the K compounds in terms of K was large, slag removability was poor and the shape and appearance of the bead were also poor in horizontal fillet welding test and vertical upward welding test.

In the wire symbol W32, since the total of Si oxides in terms of SiO₂ was large, the absorption energy of the deposited metal was low.

## Claims

1. A flux-cored wire for gas-shielded arc welding which has a steel outer sheath filled with a flux, comprising, in terms of mass% relative to a total mass of the wire, in the total of the steel outer sheath and the flux,
C: 0.03 to 0.08%,
Si: 0.1 to 0.6%,
Mn: 1.5 to 2.8%,
Cu: 0.01 to 0.5%,
Ni: 0.35 to 0.98%,
Ti: 0.05 to 0.25%, and
B: 0.002 to 0.015%,
Al: 0.05% or less,
further comprising, in terms of mass% relative to a total mass of the wire, in the flux,
the total of Ti oxides in terms of TiO₂: 3 to 8%,
the total of Al oxides in terms of Al₂O₃: 0.1 to 0.6%,
the total of Si oxides in terms of SiO₂: 0.2 to 1.0%,
the total of Zr oxides in terms of ZrO₂: 0.20 to 0.65%,
Mg: 0.2 to 0.8%,
the total of fluorine compounds in terms of F: 0.05 to 0.25%,
the total of Na compounds in terms of Na: 0.02 to 0.10%, and
the total of K compounds in terms of K: 0.05 to 0.20%, and
the balance being Fe of the steel outer sheath, iron powder, Fe component of iron alloy powder and inevitable impurities.

2. The flux-cored wire for gas-shielded arc welding according to claim 1, further comprising, in terms of mass% relative to a total mass of the wire, in the flux, one or both of Bi and Bi oxides in terms of Bi: 0.003 to 0.010%.
